# EUROPÄISCHE PATENTSCHRIFT

(11) **EP 3 015 662 B1**
(45) Veröffentlichungstag und Bekanntmachung des Hinweises auf die Patenterteilung: **15.02.2017**
(21) Anmeldenummer: 15180846.6
(22) Anmeldetag: 13.08.2015
(51) Int. Cl.: F01L 1/344

(54) **HYDRAULIKVENTIL UND SCHWENKMOTORVERSTELLER**
HYDRAULIC VALVE AND A TILT MOTOR ADJUSTER
SOUPAPE HYDRAULIQUE ET MOTEUR OSCILLANT

(30) Priorität: 31.10.2014 DE 102014115903
(43) Veröffentlichungstag der Anmeldung: 04.05.2016
(73) Patentinhaber: Hilite Germany GmbH, 97828 Marktheidenfeld (DE)
(72) Erfinder: Schulze, Dietmar, 35394 Gießen (DE)

(56) Entgegenhaltungen:
- DE-A1-102013 104 573
- US-A1- 2011 220 046

## Beschreibung

Die Erfindung betrifft gemäß Patentanspruch 1 ein Hydraulikventil für einen Schwenkmotorversteller sowie einen Schwenkmotorversteller.

Aus der deutschen Patentanmeldung mit dem Aktenzeichen DE 10 2012 106 096 A1 und in der US 2011/0220046 A1, ist ein Schwenkmotorversteller mit einem Hydraulikventil bekannt, das eine gestufte Bohrung mit von dieser abgehenden Arbeitsanschlüssen aufweist. Innerhalb der Bohrung ist ein druckausgeglichener Hohlkolben axialverschiebbar, wobei der Hohlkolben mit einem ersten Außendurchmesser innerhalb eines Bohrungsabschnitt dichtend toleriert verschiebbar ist und der Hohlkolben diesem ersten Außendurchmesser folgend benachbart eine Mantelfläche mit einem großen Außendurchmesser im Bereich des einen Arbeitsanschlusses und eine Mantelfläche mit einen kleinen Außendurchmesser im Bereich des anderen Arbeitsanschlusses aufweist, wobei von den beiden Mantelflächen jeweils eine Zulaufkante und eine Ablaufkante abgehen. Die beiden Zulaufkanten weisen voneinander hinfort und die Ablaufkanten weisen aufeinander zu, so dass ein in einen Hohlraum des Hohlkolbens eingeleiteter Versorgungsdruck einerseits an einer projizierten Kreisfläche anliegt, die vom kleinen Außendurchmesser gebildet wird, sodass eine Kraft in einer Axialrichtung wirksam ist, wohingegen der Versorgungsdruck andererseits an einer projizierten Ringfläche anliegt, die sich aus dem großen Außendurchmesser abzüglich des ersten Außendurchmessers bildet, um einen Schwenkmotorversteller mit einem Hydraulikventil zu schaffen, dessen Druckmittelanschluss die beiden Arbeitsanschlüsse auf einer gemeinsamen Seite axial benachbart sind. Das darin vorgeschlagene Hydraulikventil ist nur mit erheblichem Fertigungsaufwand herstellbar.

Der Erfindung liegt daher die Aufgabe zugrunde, ein eingangs genanntes Hydraulikventil baulich und funktional zu verbessern. Insbesondere sollen der Herstellungsaufwand und der Strömungswiderstand des Ventils verringert werden. Diese Aufgabe wird erfindungsgemäß mit den Merkmalen von Patentanspruch 1 gelöst.

Das erfindungsgemäße Hydraulikventil für einen Schwenkmotorversteller umfasst ein Ventilgehäuse, das eine gestufte Bohrung mit zwei von dieser abgehenden Arbeitsanschlüssen in Form von Querbohrungen aufweist, einen innerhalb der Bohrung zwischen einer ersten und einer zweiten Endlage axialverschieblich angeordneten druckausgeglichenen Hohlkolben und einen Kolbeneinlass zur axialen Einleitung eines Druckmittels in einen Hohlraum des Hohlkolbens, welcher mit einem Druckmittelanschluss verbindbar ist, wobei der Druckmittelanschluss durch einen Gehäuseeinlass des Ventilgehäuses gebildet ist.

Weiter umfasst das Hydraulikventil einen aus dem Hohlraum des Hohlkolbens führenden Kolbenauslass zur Verbindung des Druckmittelanschlusses mit einem der Arbeitsanschlüsse, zwei Tankanschlüsse zur Verbindung der Arbeitsanschlüsse mit einem Druckmittelreservoir sowie einen Stößel zum axialen Verstellen des Hohlkolbens durch ein Stellglied, wobei der Hohlkolben an seinem dem Druckmittelanschluss zugewandten Ende einen ersten Kolbenabschnitt mit einem ersten, kleinen Außendurchmesser, diesem ersten Kolbenabschnitt folgend benachbart einen zweiten Kolbenabschnitt mit einem zweiten, großen Außendurchmesser und einen dritten Kolbenabschnitt mit einem dritten, mittleren Außendurchmesser aufweist, wobei die drei Kolbenabschnitte jeweils in einem Gehäuseabschnitt des Ventilgehäuses dichtend tolerierbar verschiebbar sind. Die Bezeichnungen klein, mittel und groß definieren die Größenrelationen der Außendurchmesser zueinander.

Zum Druckausgleich weist der Hohlkolben an dem ersten Kolbenabschnitt und dem dritten Kolbenabschnitt jeweils eine Druckfläche auf, welche bei Druckbeaufschlagung des Hohlkolbens jeweils mit einer vom Druckmittelanschluss wegweisenden axialen Kraft beaufschlagbar sind, welche in Summe als Kraft auf den Hohlkolben wirken, und am Hohlkolben ist eine weitere an dem zweiten Kolbenabschnitt vorgesehene Druckfläche ausgebildet, welche als einzige Druckfläche des Hohlkolbens mit einer zum Druckmittelanschluss hinweisenden axialen Kraft beaufschlagbar ist, wobei die aus beiden axialen Richtungen auf den Hohlkolben wirkenden Kräfte im Wesentlichen gleich groß sind, so dass die Kraft am ersten Kolbenabschnitt durch die zwischen den Arbeitsanschlüssen herrschenden Kräfte im Wesentlichen kompensiert wird.

Mit anderen Worten ist der Hohlkolben bei einer Druckbeaufschlagung mit durch den Druckmittelanschluss eingeleitetem Druckmittel aufgrund der Kompensation der axialen Kräfte kraftausgeglichen und Axialkräfte am Hohlkolben des Hydraulikventils sind unabhängig vom Druck des Druckmittels.

Durch die vorgeschlagene Ausbildung mit den unterschiedlichen Gehäuseabschnitten des Ventilgehäuses und den entsprechenden Kolbenabschnitten des Hohlkolbens mit den daran ausgebildeten Druckflächen ist es möglich, den Herstellungsaufwand des Hydraulikventils zu reduzieren und insbesondere den im Wesentlichen rotationssymmetrischen Hohlkolben kostengünstig herzustellen und zu montieren. Vorteilhafterweise weist der Hohlkolben ferner keine Schrägen auf, welche strömungstechnische Nachteile zur Folge hätten.

Vorzugsweise wird der erste Gehäuseabschnitt durch eine in der Bohrung des Ventilgehäuses angeordnete Hülse gebildet. Der erste Gehäuseabschnitt kann hierdurch ein einfacher Weise in dem Ventilgehäuse vorgesehen und die Montage des Hohlkolbens kann vereinfacht werden. Dabei kann die Hülse beispielsweise durch Einpressen oder mittels einer Stiftverbindung in einfacher Weise eingebracht werden. Alternativ kann der dritte Gehäuseabschnitt durch eine in der Bohrung des Ventilgehäuses angeordnete Hülse gebildet werden.

Gemäß einer vorteilhaften Ausgestaltung der Erfindung folgt dem Druckmittelanschluss in axialer Richtung eine von der Bohrung abgehende Querbohrung als erster Tankanschluss, welchem der erste Arbeitsanschluss und anschließend der zweite Arbeitsanschluss folgen, wobei dem zweiten Arbeitsanschluss ein zweiter Tankanschluss in axialer Richtung folgt, welcher durch einen axialen Gehäuseauslass gebildet ist. Durch diese Anschlussreihenfolge kann ein axial sehr kurz bauendes Hydraulikventil bereitgestellt werden. Gleichzeitig ermöglicht der zweite Tankabschluss im Bereich des Gehäuseauslasses eine Schmierung des an den Stößel gekoppelten Stellglieds.

Vorzugsweise sind die Druckfläche am ersten Kolbenabschnitt durch eine projizierte Kreisfläche und die Druckflächen durch am zweiten und dritten Kolbenabschnitt als aufeinander zuweisende Ringflächen gebildet. Zusätzliche Bohrungen im Hohlkolben oder im Ventilgehäuse müssen hierdurch zur Bildung der notwendigen Druckflächen nicht vorgesehen werden.

Gemäß einer vorteilhaften Ausbildung der Erfindung ist zwischen der Hülse und einer zwischen dem ersten und dem zweiten Kolbenabschnitt gebildeten Stufe ein erster Ringraum zur Verbindung des ersten Arbeitsanschlusses mit dem ersten Tankanschluss vorgesehen.

Vorzugsweise ist in dem ersten Ringraum zwischen der Stufe und der Hülse eine Rückstellfeder für den Hohlkolben angeordnet und die Federvorspannkraft der Rückstellfeder ist gemäß einer weiteren vorteilhaften Ausbildung mittels der Hülse einstellbar.

Zwischen dem zweiten und dem dritten Kolbenabschnitt ist vorzugsweise ein zweiter Ringraum vorgesehen, welcher je nach Stellung des Hohlkolbens zur Verbindung der Arbeitsanschlüsse mit dem Druckmittelanschluss über den Kolbenauslass ausgebildet ist.

Gemäß einer vorteilhaften Ausführung ist zwischen dem dritten Kolbenabschnitt und dem Gehäuseauslass ein dritter Ringraum vorgesehen, welcher zur Verbindung des Arbeitsanschlusses mit dem zweiten Tankanschluss ausgebildet ist. Zusätzliche Radial-Bohrungen im Ventilgehäuse können hierdurch entfallen.

Der dritte Ringraum kann in einfacher Weise durch eine Abstufung des dritten Kolbenabschnittes vorgesehen sein.

Der Gehäuseeinlass kann gemäß vorteilhaften Ausbildungen der Erfindung axial oder radial im Ventilgehäuse ausgebildet sein.

Durch die Anordnung eines Rückschlagventils in dem Gehäuseeinlass kann in einfacher und sicherer Weise ein Zurückströmen des Druckmittels in Richtung Druckmittelanschluss verhindert werden. Das Rückschlagventil kann dabei beispielsweise als Kugel- oder Plattenrückschlagventil vorgesehen sein.

Vorzugsweise kann der Stößel mit dem Hohlkolben gekoppelt vorgesehen sein. Möglich ist jedoch eine mit dem Hohlkolben einteilige Ausbildung des Stößels.

Das erfindungsgemäße Hydraulikventil findet insbesondere Anwendung als Zentralventil radial innerhalb eines Rotors eines Schwenkmotorverstellers mit einem Stator und dem relativ zu dem Stator zwischen einer ersten Endlage und einer zweiten Endlage verdrehbaren Rotor zum Verstellen einer Nockenwelle einer Brennkraftmaschine. Es ist jedoch auch möglich, das Hydraulikventil außerhalb des Rotors als dezentrales Ventil anzuordnen.

Weitere Vorteile der Erfindung gehen aus den weiteren Patentansprüchen, der Beschreibung und der Zeichnung vor.

Die Erfindung ist nachfolgend anhand eines Ausführungsbeispiels näher erläutert. Es zeigen schematisch und beispielhaft:
- Fig. 1: einen Querschnitt des erfindungsgemäßen Schwenkmotorverstellers und
- Fig. 2: das Hydraulikventil zum Steuern des Schwenkmotorverstellers gemäß Fig.1 im Längsschnitt.

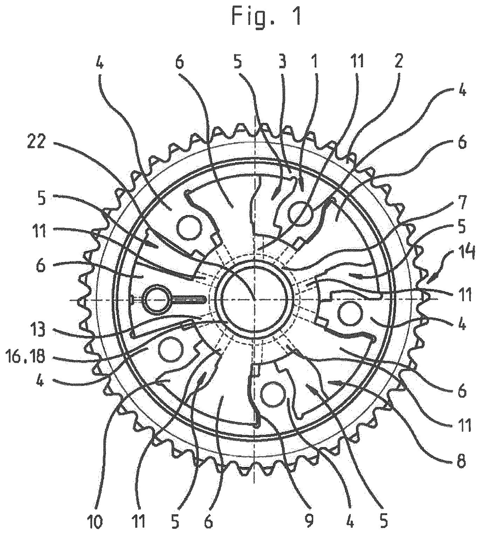

Mit einem Schwenkmotorversteller 14 gemäß Fig. 1 wird während des Betriebes eines Verbrennungsmotors die Winkellage an der Nockenwelle 18 gegenüber einem Antriebsrad 2 stufenlos verändert. Durch Verdrehen der Nockenwelle 18 werden die Öffnungs- und Schließzeitpunkte der Gaswechselventile so verschoben, dass der Verbrennungsmotor bei der jeweiligen Drehzahl seine optimale Leistung bringt. Der Schwenkmotorversteller 14 weist einen zylindrischen Stator 1 auf, der drehfest mit dem Antriebsrad 2 verbunden ist. Im Ausführungsbeispiel ist das Antriebsrad 2 ein Kettenrad, über das eine nicht näher dargestellte Kette geführt ist. Das Antriebsrad 2 kann aber auch ein Zahnriemenrad sein, über das ein Antriebsriemen als Antriebselement geführt ist. Über dieses Antriebselement und das Antriebsrad 2 ist der Stator 1 mit der Kurbelwelle antriebsverbunden.

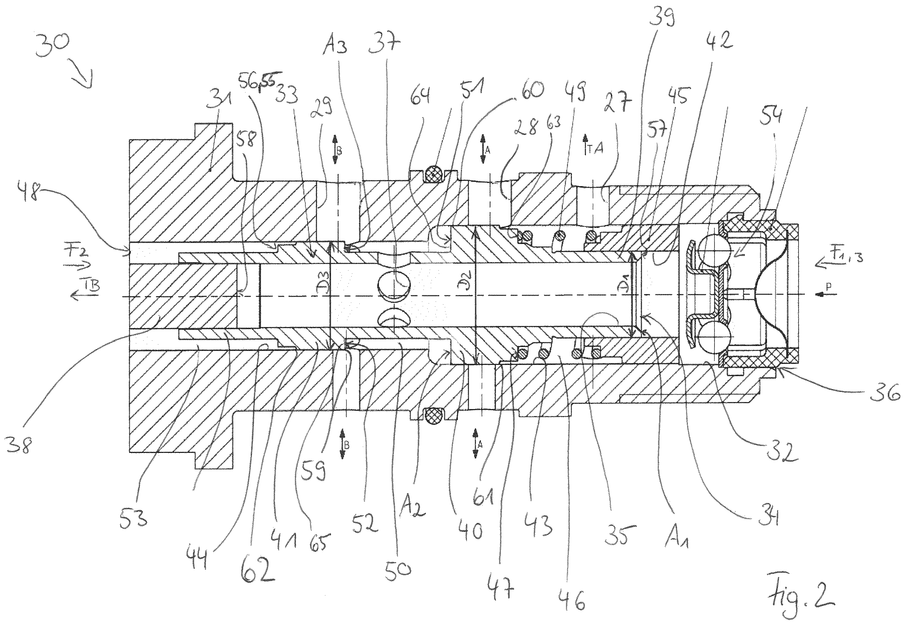

Der Stator 1 umfasst einen zylindrischen Statorgrundkörper 3, an dessen Innenseite radial nach innen in gleichen Abständen Stege 4 abstehen. Zwischen benachbarten Stegen 4 werden Zwischenräume 5 gebildet, in die, über ein in Fig. 2 näher dargestelltes zentral angeordnetes Hydraulikventil 30 gesteuert, Druckmittel eingebracht wird. Zwischen benachbarten Stegen 4 ragen Flügel 6, die radial nach außen von einer zylindrischen Rotornabe 7 eines Rotors 8 abstehen. Diese Flügel 6 unterteilen die Zwischenräume 5 zwischen den Stegen 4 jeweils in zwei Druckkammern 9 und 10. Die eine Druckkammer 9 ist der Verstellung in Richtung "Früh" zugeordnet, wohingegen die andere Druckkammer 10 der Verstellung in Richtung "Spät" zugeordnet ist.

Die Stege 4 liegen mit ihren Stirnseiten dichtend an der Außenmantelfläche der Rotornabe 7 an. Die Flügel 6 ihrerseits liegen mit ihren Stirnseiten dichtend an der zylindrischen Innenwand des Statorgrundkörpers 3 an.

Der Rotor 8 ist drehfest mit der Nockenwelle 18 verbunden. Um die Winkellage zwischen der Nockenwelle 18 und dem Antriebsrad 2 zu verändern, wird der Rotor 8 relativ zum Stator 1 gedreht. Hierzu wird je nach gewünschter Drehrichtung das Druckmedium in den Druckkammern 9 oder 10 unter Druck gesetzt, während die jeweils anderen Druckkammern 10 oder 9 zum Tank T hin entlastet werden. Um den Rotor 8 gegenüber dem Stator 1 entgegen dem Uhrzeigersinn in die dargestellte Stellung zu verschwenken, wird vom Hydraulikventil 30 ein ringförmiger erster ringförmiger Rotorkanal in der Rotornabe 7 unter Druck gesetzt. Von diesem ersten Rotorkanal führen dann weitere Kanäle 11 in die Druckkammern 10. Dieser erste Rotorkanal ist einem ersten Arbeitsanschluss A zugeordnet. Um den Rotor 8 hingegen im Uhrzeigersinn zu verschwenken, wird vom Hydraulikventil ein zweiter ringförmiger Rotorkanal in der Rotornabe 7 unter Druck gesetzt, in den Kanäle 13 münden. Dieser zweite Rotorkanal ist einem zweiten Arbeitsanschluss B zugeordnet. Diese beiden Rotorkanäle sind bezüglich einer Zentralachse 22 axial beabstandet zueinander angeordnet, so dass diese in der Zeichnungsebene von Fig. 1 verdeckt hintereinander liegen.

Der Schwenkmotorversteller 14 ist auf die als Hohlrohr 16 ausgeführte gebaute Nockenwelle 18 aufgesetzt. Dazu ist der Rotor 8 auf die Nockenwelle 18 gesteckt. Das Hohlrohr 16 weist Bohrungen auf, welche die den beiden Arbeitsanschlüssen A, B zugeordneten Rotorkanäle hydraulisch mit Querbohrungen 28, 29 des Hydraulikventils 30 verbinden.

Somit ist der Schwenkmotorversteller 14 mittels des in Fig. 2 im Längsschnitt dargestellten Hydraulikventils 30 schwenkbar, welches insbesondere Anwendung als Zentralventil radial innerhalb des Rotors 8 des Schwenkmotorverstellers 14 findet. Es ist jedoch auch möglich, das Hydraulikventil 30 außerhalb des Rotors 8 anzuordnen.

Wie Fig. 2 zu entnehmen ist, umfasst das Hydraulikventil 30 ein Ventilgehäuse 31, das eine gestufte Bohrung 32 mit von dieser abgehenden Arbeitsanschlüssen A, B in Form der Querbohrungen 28, 29 aufweist. Innerhalb der Bohrung 32 ist ein zwischen einer ersten und einer zweiten Endlage druckausgeglichener Hohlkolben 33 axialverschieblich angeordnet, der einen Kolbeneinlass 34 zur axialen Einleitung eines Druckmittels in einen Hohlraum 35 des Hohlkolbens 33 aufweist. Der Kolbeneinlass 34 ist mit einem Druckmittelanschluss P verbindbar, welcher durch einen axial ausgebildeten Gehäuseeinlass 36 des Ventilgehäuses 31 gebildet ist. Alternativ kann der Gehäuseeinlass auch radial im Ventilgehäuse 31 ausgebildet werden.

Weiter umfasst das Hydraulikventil 30 einen aus dem Hohlraum 35 des Hohlkolbens 33 führenden Kolbenauslass 37 in Form von mehreren radialen Bohrungen zur Verbindung des Druckmittelanschlusses P mit einem der Arbeitsanschlüsse A, B in Abhängigkeit der Stellung des Hohlkolbens 33 im Ventilgehäuse 31.

Zwei Tankanschlüsse TA, TB dienen zur jeweiligen Verbindung der Arbeitsanschlüsse A, B mit einem nicht dargestellten Druckmittelreservoir.

Wie aus Fig. 2 ersichtlich ist, folgt dem Druckmittelanschluss P in axialer Richtung eine von der Bohrung 32 abgehende Querbohrung 27 als erster Tankanschluss TA, welchem der ihm zugehörige erste Arbeitsanschluss A und anschließend der zweite Arbeitsanschluss B folgen, welchem wiederum sein zugeordneter, zweiter Tankanschluss TB in axialer Richtung folgt. Diese Anschlussreihenfolge ermöglicht ein axial sehr kurz bauendes Hydraulikventil 30.

Der zweite Tankanschluss TB wird durch einen axialen Gehäuseauslass 48 des Ventilgehäuses 31 gebildet, so dass gleichzeitig eine Schmierung eines nicht gezeigten Stellglieds ermöglicht werden kann, welches zum axialen Verstellen des Hohlkolbens 33 mit einem mit dem Hohlkolben 33 verbundenen Stößel 38 gekoppelt ist. Alternativ kann der Stößel 38 auch einteilig mit dem Hohlkolben 33 vorgesehen sein.

An seinem dem Druckmittelanschluss P zugewandten Ende weist der Hohlkolben 33 einen ersten Kolbenabschnitt 39 mit einem ersten, kleinen Außendurchmesser D1 auf, welcher in einem ersten Gehäuseabschnitt 42 des Ventilgehäuses 31 dichtend tolerierbar verschiebbar ist. Das Ventilgehäuse 31 umfasst hierzu eine Hülse 45, welche den ersten Gehäuseabschnitt 42 bildet und beispielsweise durch Einpressen oder mittels einer Stiftverbindung in die Bohrung 32 eingebracht werden kann.

Dem ersten Kolbenabschnitt 39 folgend benachbart sind ein zweiter Kolbenabschnitt 40 mit einem zweiten, großen Außendurchmesser D2 und ein dritter Kolbenabschnitt 41 mit einem dritten, mittleren Außendurchmesser D3 vorgesehen, welche in einem zweiten und dritten Gehäuseabschnitt 43, 44 des Ventilgehäuses 31 dichtend tolerierbar verschiebbar sind. Die Bezeichnungen klein, mittel und groß definieren die Größenrelationen der Außendurchmesser zueinander: D2 > D3 > D1.

Eine nicht dargestellte alternative Ausführungsform der Erfindung sieht vor, den ersten Gehäuseabschnitt 42 mittels einer Stufe der Bohrung 32 und den dritten Gehäuseabschnitt 44 mittels einer Hülse auszubilden, um die Montage des Hohlkolbens 33 in das Ventilgehäuse 31 zu ermöglichen.

Zum Druckausgleich weist der Hohlkolben 33 an dem ersten und dritten Kolbenabschnitt 39 und 41 jeweils eine Druckfläche A1 und A3 auf, welche bei Druckbeaufschlagung des Hohlkolbens 33 jeweils mit einer vom Druckmittelanschluss P wegweisenden axialen Kraft F1 und F3 beaufschlagbar sind. Die beiden Kräfte F1 und F3 wirken in Summe als Kraft F1,3 auf den Hohlkolben 33.

Eine weitere an dem zweiten Kolbenabschnitt 40 vorgesehene Druckfläche A2 ist dagegen mit einer zum Druckmittelanschluss P hinweisenden axialen Kraft F2 beaufschlagbar. Die Druckfläche A2 ist die einzige Fläche, welche in Richtung P mit einer axialen Kraft beaufschlagt ist. Die Kräfte F1 und F3 sind so ausgelegt, dass die aus beiden axialen Richtungen auf den Hohlkolben 33 wirkenden Kräfte F1,3, F2 im Wesentlichen gleich groß sind, wodurch der Hohlkolben 33 bei einer Druckbeaufschlagung mit durch den Druckmittelanschluss P eingeleitetem Druckmittel durch die Kompensation der beiden Kräfte F1,3 und F2 kraftausgeglichen ist und Axialkräfte - beispielsweise des Stellgliedes oder einer Rückstellfeder 49 - unabhängig vom Druck des Druckmittels auf den Hohlkolben 33 wirken.

Die Druckfläche A1 am ersten Kolbenabschnitt 39 wird, wie aus Fig. 2 deutlich wird, durch eine projizierte Kreisfläche gebildet, da das Druckmittel sowohl eine am ersten Kolbenabschnitt 39 ausgebildete Ringfläche 57 als auch eine Kreisfläche 58 des Stößels 38 mit Druck beaufschlagt.

Die Druckflächen A2 und A3 sind am zweiten und dritten Kolbenabschnitt 40, 41 als aufeinander zuweisende Ringflächen 64, 65 ausgebildet, welche, wie in Fig. 2 ersichtlich ist, jeweils durch eine axiale Abstufung 51, 52 des Hohlkolbens 33 entstehen.

Zwischen der Hülse 45 und einer zwischen dem ersten und dem zweiten Kolbenabschnitt 39, 40 gebildeten Stufe 47 ist ein erster Ringraum 46 zur Verbindung des ersten Arbeitsanschlusses A mit dem ersten Tankanschluss TA vorgesehen. Die Stufe 47 ermöglicht zunächst einen gedämpften Abfluss in Richtung Tankanschluss TA.

Die Rückstellfeder 49, welche den Hohlkolben 33 in einem unbelasteten Zustand gegen einen nicht gezeigten Axialanschlag in seine erste Endlage drückt, ist in dem ersten Ringraum 46 zwischen einer axialen Fläche 63 der Stufe 47 und der Hülse 46 angeordnet, so dass eine Federvorspannkraft durch eine axiale Positionierung der Hülse 46 eingestellt werden kann.

Zwischen dem zweiten und dem dritten Kolbenabschnitt 40, 41 ist weiter ein zweiter Ringraum 50 vorgesehen, welcher je nach Stellung des Hohlkolbens 33 die Arbeitsanschlüsse A, B mit dem Druckmittelanschluss P über den Kolbenauslass 37 verbindet. In der in Fig. 2 gezeigten Stellung des Hohlkolbens 33 ist der zweite Arbeitsanschluss B mit dem Druckmittelanschluss P verbunden, da eine dem Gehäuseauslass 48 abgewandte Steuerkante 59 der Abstufung 52 die Querbohrung 29 noch nicht komplett überfahren hat. Eine an der Abstufung 51 ausgebildete, dem Gehäuseauslass 48 zugewandte Steuerkante 60 des ersten Arbeitsanschlusses A hat die Querbohrung 28 in Richtung Gehäuseauslass 48 komplett überfahren, so dass ein Durchfluss von P in Richtung Arbeitsanschluss A verhindert ist. Dagegen befindet sich eine weitere Steuerkante 61 des zweiten Kolbenabschnittes 40 im Bereich der Querbohrung 28, wodurch ein Durchfluss von Druckmittel vom ersten Arbeitsanschluss A über den ersten Ringraum 46 in Richtung Tankanschluss TA erfolgen kann.

Im zweiten Ringraum 50 wirkt der Druck des Druckmittels unabhängig von der Stellung des Hohlkolbens 33 auf die Ringflächen 64, 65, wodurch der Druckausgleich dadurch erfolgt, dass die axiale Kraft F1 im Wesentlichen gleich groß ist wie das Ergebnis der Subtraktion von den Kräften F2 und F3. Die Kraft F1 wird also durch die im Ringraum 50 zwischen den Arbeitsanschlüssen A und B herrschenden Kräfte F2 und F3 im Wesentlichen kompensiert.

Ein dritter, zwischen dem dritten Kolbenabschnitt 41 und dem Gehäuseauslass 48 vorgesehener Ringraum 53 ermöglicht eine Verbindung des zweiten Arbeitsanschlusses B mit dem zweiten Tankanschluss TB, sobald eine dem Gehäuseauslass 48 zugewandte Steuerkante 62 des dritten Kolbenabschnittes 41 gegen die Kraft der Rückstellfeder 49 in Richtung Druckanschluss P in den Bereich der Querbohrung 29 verschoben wird.

Wie ersichtlich ist, ist der dritte Ringraum 53 durch eine Abstufung 55 des dritten Kolbenabschnittes 41 gebildet, wodurch der dritte Ringraum 53 einfach vorgesehen werden kann. Eine ausgebildete Stufe 56 ermöglicht dabei zunächst einen gedämpften Abfluss in Richtung Tankanschluss TB.

Durch die Anordnung eines Rückschlagventils 54 im Gehäuseeinlass 36 kann in einfacher und sicherer Weise ein Zurückströmen des Druckmittels in Richtung Druckmittelanschluss P verhindert werden. Das Rückschlagventil 54 kann dabei beispielsweise als Kugel- oder Plattenrückschlagventil vorgesehen sein.

Durch die vorgeschlagene Ausbildung mit den unterschiedlichen Gehäuseabschnitten 42, 43, 44 des Ventilgehäuses 31 und den entsprechenden Kolbenabschnitten 39, 40, 41 des Hohlkolbens 33 mit den daran ausgebildeten Druckflächen A1, A2, A3 ist es möglich, den Herstellungsaufwand des Hydraulikventils 30 zu reduzieren und insbesondere den im Wesentlichen rotationssymmetrischen Hohlkolben 33 kostengünstig herzustellen und zu montieren. Vorteilhafterweise weist der Hohlkolben 33 ferner keine Schrägen auf, welche strömungstechnische Nachteile zur Folge hätten.

### Bezugszeichenliste

- 1: Stator
- 2: Antriebsrad
- 3: Statorgrundkörper
- 4: Stege
- 5: Zwischenräume
- 6: Flügel
- 7: Rotornabe
- 8: Rotor
- 9: Druckkammer
- 10: Druckkammer
- 11: Kanal
- 13: Kanal
- 14: Schwenkmotorversteller
- 16: Hohlrohr
- 18: Nockenwelle
- 22: Zentralachse
- 27: Querbohrung
- 28: Querbohrung
- 29: Querbohrung
- 30: Hydraulikventil
- 31: Ventilgehäuse
- 32: Bohrung
- 33: Hohlkolben
- 34: Kolbeneinlass
- 35: Hohlraum
- 36: Gehäuseeinlass
- 37: Kolbenauslass
- 38: Stößel
- 39: erster Kolbenabschnitt
- 40: zweiter Kolbenabschnitt
- 41: dritter Kolbenabschnitt
- 42: erster Gehäuseabschnitt
- 43: zweiter Gehäuseabschnitt
- 44: dritter Gehäuseabschnitt
- 45: Hülse
- 46: erster Ringraum
- 47: Stufe
- 48: Gehäuseauslass
- 49: Rückstellfeder
- 50: zweiter Ringraum
- 51: Abstufung
- 52: Abstufung
- 53: dritter Ringraum
- 54: Rückschlagventil
- 55: Abstufung
- 56: Stufe
- 57: Ringfläche
- 58: Kreisfläche
- 59: Steuerkante
- 60: Steuerkante
- 61: Steuerkante
- 62: Steuerkante
- 63: Fläche
- 64: Ringfläche
- 65: Ringfläche

- A: Arbeitsanschluss
- A1: Druckfläche
- A2: Druckfläche
- A3: Druckfläche
- B: Arbeitsanschluss
- D1: erster Außendurchmesser
- D2: zweiter Außendurchmesser
- D3: dritter Außendurchmesser
- F1: Kraft
- F2: Kraft
- F3: Kraft
- F1,3: Kraft
- P: Druckmittelanschluss
- TA: Tankanschluss
- TB: Tankanschluss

## Patentansprüche

1. Hydraulikventil (30) für einen Schwenkmotorversteller (14) mit
a. einem Ventilgehäuse (31), das eine gestufte Bohrung (32) mit zwei von dieser abgehenden Arbeitsanschlüssen (A, B) in Form von Querbohrungen (28, 29) aufweist,
b. einem innerhalb der Bohrung (32) zwischen einer ersten und einer zweiten Endlage axialverschieblich angeordneten druckausgeglichenen Hohlkolben (33),
c. einem Kolbeneinlass (34) zur axialen Einleitung eines Druckmittels in einen Hohlraum (35) des Hohlkolbens (33), welcher mit einem Druckmittelanschluss (P) verbindbar ist, wobei der Druckmittelanschluss (P) durch einen Gehäuseeinlass (36) des Ventilgehäuses (31) gebildet ist,
d. einem aus dem Hohlraum (35) des Hohlkolbens (33) führenden Kolbenauslass (37) zur Verbindung des Druckmittelanschlusses (P) mit einem der Arbeitsanschlüsse (A,B),
e. zwei Tankanschlüssen (TA, TB) zur Verbindung der Arbeitsanschlüsse (A, B) mit einem Druckmittelreservoir,
f. einem Stößel (38) zum axialen Verstellen des Hohlkolbens (33) durch ein Stellglied,
g. wobei der Hohlkolben (33) an seinem dem Druckmittelanschluss (P) zugewandten Ende einen ersten Kolbenabschnitt (39) mit einem ersten, kleinen Außendurchmesser (D1),
h. diesem ersten Kolbenabschnitt (39) folgend benachbart einen zweiten Kolbenabschnitt (40) mit einem zweiten, großen Außendurchmesser (D2) und
i. einen dritten Kolbenabschnitt (41) mit einem dritten, mittleren Außendurchmesser (D3) aufweist, wobei die drei Kolbenabschnitte (39,40,41) jeweils in einem Gehäuseabschnitt (42, 43, 44) des Ventilgehäuses (31) dichtend tolerierbar verschiebbar sind,
j. wobei der Hohlkolben (33) zum Druckausgleich an dem ersten Kolbenabschnitt (39) und dem dritten Kolbenabschnitt (41) jeweils eine Druckfläche (A1, A3) aufweist, welche bei Druckbeaufschlagung des Hohlkolbens (33) jeweils mit einer vom Druckmittelanschluss (P) wegweisenden axialen Kraft (F1, F3) beaufschlagbar sind, welche in Summe als Kraft (F1,3) auf den Hohlkolben (33) wirken, und am Hohlkolben (33) eine weitere an dem zweiten Kolbenabschnitt (40) vorgesehene Druckfläche (A2) ausgebildet ist, welche als einzige Druckfläche des Hohlkolbens (33) mit einer zum Druckmittelanschluss (P) hinweisenden axialen Kraft (F2) beaufschlagbar ist, wobei die aus beiden axialen Richtungen auf den Hohlkolben (33) wirkenden Kräfte (F1,3, F2) im Wesentlichen gleich groß sind, so dass die Kraft (F1) am ersten Kolbenabschnitt (39) durch die zwischen den Arbeitsanschlüssen (A, B) herrschenden Kräfte (F2, F3) im Wesentlichen kompensiert wird.

2. Hydraulikventil (30) nach Anspruch 1, **dadurch gekennzeichnet, dass** der erste Gehäuseabschnitt (42) durch eine in der Bohrung (32) des Ventilgehäuses (31) angeordnete Hülse (45) gebildet wird.

3. Hydraulikventil (30) nach Anspruch 1, **dadurch gekennzeichnet, dass** der dritte Gehäuseabschnitt (44) durch eine in der Bohrung (32) des Ventilgehäuses (31) angeordnete Hülse gebildet wird.

4. Hydraulikventil (30) nach wenigstens einem der vorhergehenden Ansprüche 1 bis 3, **dadurch gekennzeichnet, dass** dem Druckmittelanschluss (P) in axialer Richtung eine von der Bohrung (32) abgehende Querbohrung (27) als erster Tankanschluss (TA) folgt, welchem der erste Arbeitsanschluss (A) und anschließend der zweite Arbeitsanschluss (B) folgen, wobei dem zweiten Arbeitsanschluss (B) ein zweiter Tankanschluss (TB) in axialer Richtung folgt, welcher durch einen axialen Gehäuseauslass (48) gebildet ist.

5. Hydraulikventil (30) nach wenigstens einem der vorhergehenden Ansprüche, **dadurch gekennzeichnet, dass** die Druckfläche (A1) am ersten Kolbenabschnitt (39) durch eine projizierte Kreisfläche und die Druckflächen (A2, A3) durch am zweiten und dritten Kolbenabschnitt (40, 41) als aufeinander zuweisende Ringflächen (64, 65) gebildet sind.

6. Hydraulikventil (30) nach wenigstens einem der vorhergehenden Ansprüche 2 und 4 oder 2 und 5, **dadurch gekennzeichnet, dass** zwischen der Hülse (45) und einer zwischen dem ersten und dem zweiten Kolbenabschnitt (39,40) gebildeten Stufe (47) ein erster Ringraum (46) zur Verbindung des ersten Arbeitsanschlusses (A) mit dem ersten Tankanschluss (TA) vorgesehen ist.

7. Hydraulikventil (30) nach Anspruch 6, **dadurch gekennzeichnet, dass** in dem ersten Ringraum (46) zwischen der Stufe (47) und der Hülse (45) eine Rückstellfeder (49) für den Hohlkolben (33) angeordnet ist.

8. Hydraulikventil (30) nach Anspruch 7, **dadurch gekennzeichnet, dass** eine Federvorspannkraft der Rückstellfeder (49) mittels der Hülse (45) einstellbar ist.

9. Hydraulikventil (30) nach wenigstens einem der vorhergehenden Ansprüche 6 bis 8, **dadurch gekennzeichnet, dass** zwischen dem zweiten und dem dritten Kolbenabschnitt (40, 41) ein zweiter Ringraum (50) vorgesehen ist, welcher je nach Stellung des Hohlkolbens (33) zur Verbindung der Arbeitsanschlüsse (A, B) mit dem Druckmittelanschluss (P) über den Kolbenauslass (37) ausgebildet ist.

10. Hydraulikventil (30) nach Anspruch 9, **dadurch gekennzeichnet, dass** zwischen dem dritten Kolbenabschnitt (41) und dem Gehäuseauslass (48) ein dritter Ringraum (53) vorgesehen ist, welcher zur Verbindung des Arbeitsanschlusses (B) mit dem zweiten Tankanschluss (TB) ausgebildet ist.

11. Hydraulikventil (30) nach Anspruch 10, **dadurch gekennzeichnet, dass** der dritte Ringraum (53) durch Abstufung (55) des dritten Kolbenabschnittes (41) ausgebildet ist.

12. Hydraulikventil (30) nach wenigstens einem der vorangegangenen Ansprüche, **dadurch gekennzeichnet, dass** der Gehäuseeinlass (36) axial im Ventilgehäuse (31) angeordnet ist.

13. Hydraulikventil (30) nach wenigstens einem der vorangegangenen Ansprüche 1 bis 11, **dadurch gekennzeichnet, dass** der Gehäuseeinlass radial im Ventilgehäuse (31) angeordnet ist.

14. Hydraulikventil (30) nach wenigstens einem der vorangegangenen Ansprüche, **dadurch gekennzeichnet, dass** in dem Gehäuseeinlass (36) ein Rückschlagventil (54) angeordnet ist.

15. Hydraulikventil (30) nach wenigstens einem der vorangegangenen Ansprüche, **dadurch gekennzeichnet, dass** der Stößel (38) mit dem Hohlkolben (33) gekoppelten vorgesehen ist.

16. Schwenkmotorversteller (14) mit einem Stator (1) und einem relativ zu dem Stator (1) zwischen einer ersten Endlage und einer zweiten Endlage verdrehbaren Rotor (8) zum Verstellen einer Nockenwelle (18) einer Brennkraftmaschine, **dadurch gekennzeichnet, dass** der Schwenkmotorversteller (14) zum Steuern einer Verdrehung des Rotors (8) ein Hydraulikventil (30) nach wenigstens einem der vorhergehenden Ansprüche aufweist.

## Claims

1. Hydraulic valve (30) for a pivoting motor adjuster (14) having
a. a valve housing (31) which has a stepped bore (32) with two operating connectors (A, B) which branch off from it in the form of transverse bores (28, 29),
b. a pressure-equalized hollow piston (33) which is arranged such that it can be displaced axially within the bore (32) between a first and a second end position,
c. a piston inlet (34) for the axial introduction of a pressure medium into a cavity (35) of the hollow piston (33), which cavity (35) can be connected to a pressure medium connector (P), the pressure medium connector (P) being formed by way of a housing inlet (36) of the valve housing (31),
d. a piston outlet (37) which leads out of the cavity (35) of the hollow piston (33) for connecting the pressure medium connector (P) to one of the operating connectors (A, B),
e. two tank connectors (TA, TB) for connecting the operating connectors (A, B) to a pressure medium reservoir,
f. a tappet (38) for axially adjusting the hollow piston (33) by way of an actuator,
g. the hollow piston (33) having, at its end which faces the pressure medium connector (P), a first piston section (39) with a first, small external diameter (D1),
h. in an adjacent manner so as to follow the said first piston section (39), a second piston section (40) with a second, large external diameter (D2), and
i. a third piston section (41) with a third, medium external diameter (D3), it being possible for the three piston sections (39, 40, 41) to be displaced in each case in a housing section (42, 43, 44) of the valve housing (31) in a tolerably sealing manner,
j. the hollow piston (33) having, for pressure equalization, in each case one pressure face (A1, A3) on the first piston section (39) and the third piston section (41), which pressure faces (A1, A3), when the hollow piston (33) is loaded with pressure, can be loaded in each case with an axial force (F1, F3) which points away from the pressure medium connector (P), which axial forces (F1, F3) act in total as a force (F1,3) on the hollow piston (33), and a further pressure face (A2) which is provided on the second piston section (40) being configured on the hollow piston (33), which pressure face (A2), as the single pressure face of the hollow piston (33), can be loaded with an axial force (F2) which points towards the pressure medium connector (P), the forces (F1,3, F2) which act on the hollow piston (33) from both axial directions being of substantially identical magnitude, with the result that the force (F1) on the first piston section (39) is substantially compensated for by way of the forces (F2, F3) which prevail between the operating connectors (A, B).

2. Hydraulic valve (30) according to Claim 1, **characterized in that** the first housing section (42) is formed by way of a sleeve (45) which is arranged in the bore (32) of the valve housing (31).

3. Hydraulic valve (30) according to Claim 1, **characterized in that** the third housing section (44) is formed by way of a sleeve which is arranged in the bore (32) of the valve housing (31).

4. Hydraulic valve (30) according to at least one of the preceding Claims 1 to 3, **characterized in that** the pressure medium connector (P) is followed in the axial direction by a transverse bore (27) which branches off from the bore (32) as a first tank connector (TA) which is followed by the first operating connector (A) and subsequently the second operating connector (B), the second operating connector (B) being followed in the axial direction by a second tank connector (TB) which is formed by way of an axial housing outlet (48).

5. Hydraulic valve (30) according to at least one of the preceding claims, **characterized in that** the pressure face (A1) on the first piston section (39) is formed by way of a projected circular face, and the pressure faces (A2, A3) by on the second and third piston section (40, 41) are formed as annular faces (64, 65) which point towards one another.

6. Hydraulic valve (30) according to at least one of the preceding Claims 2 and 4 or 2 and 5, **characterized in that** a first annular space (46) for connecting the first operating connector (A) to the first tank connector (TA) is provided between the sleeve (45) and a step (47) which is formed between the first and the second piston section (39, 40).

7. Hydraulic valve (30) according to Claim 6, **characterized in that** a restoring spring (49) for the hollow piston (33) is arranged in the first annular space (46) between the step (47) and the sleeve (45).

8. Hydraulic valve (30) according to Claim 7, **characterized in that** a spring prestressing force of the restoring spring (49) can be set by means of the sleeve (45).

9. Hydraulic valve (30) according to at least one of the preceding Claims 6 to 8, **characterized in that** a second annular space (50) is provided between the second and the third piston section (40, 41), which second annular space (50) is configured, depending on the position of the hollow piston (33), for connecting the operating connectors (A, B) to the pressure medium connector (P) via the piston outlet (37).

10. Hydraulic valve (30) according to Claim 9, **characterized in that** a third annular space (53) is provided between the third piston section (41) and the housing outlet (48), which third annular space (53) is configured for connecting the operating connector (B) to the second tank connector (TB).

11. Hydraulic valve (30) according to Claim 10, **characterized in that** the third annular space (53) is configured by way of a stepped portion (55) of the third piston section (41).

12. Hydraulic valve (30) according to at least one of the preceding claims, **characterized in that** the housing inlet (36) is arranged axially in the valve housing (31).

13. Hydraulic valve (30) according to at least one of the preceding Claims 1 to 11, **characterized in that** the housing inlet is arranged radially in the valve housing (31).

14. Hydraulic valve (30) according to at least one of the preceding claims, **characterized in that** a check valve (54) is arranged in the housing inlet (36).

15. Hydraulic valve (30) according to at least one of the preceding claims, **characterized in that** the tappet (38) is provided such that it is coupled to the hollow piston (33).

16. Pivoting motor adjuster (14) having a stator (1) and a rotor (8) which can be rotated relative to the stator (1) between a first end position and a second end position for adjusting a camshaft (18) of an internal combustion engine, **characterized in that** the pivoting motor adjuster (14) has a hydraulic valve (30) according to at least one of the preceding claims for controlling a rotation of the rotor (8).

## Revendications

1. Soupape hydraulique (30) pour dispositif (14) d'ajustement de moteur pivotant, la soupape présentant
a. un boîtier de soupape (31) qui présente un alésage (32) en gradins d'où partent deux raccordements de travail (A, B) qui présentent la forme d'alésages transversaux (28, 29),
b. un piston creux (33) d'équilibrage de pression disposé à coulissement axial entre une première et une deuxième position d'extrémité à l'intérieur de l'alésage (32),
c. une entrée (34) de piston qui permet d'introduire axialement un fluide sous pression dans une cavité (35) du piston creux (33) qui peut être raccordée à un raccordement (P) de fluide sous pression, le raccordement (P) de fluide sous pression étant formé par une entrée (36) du boîtier de soupape (31),
d. une sortie de piston (37) qui conduit hors de la cavité (35) du piston creux (33) et qui assure la liaison du raccordement (P) de fluide sous pression avec l'un des raccordements de travail (A, B),
e. deux raccordements de réservoir (TA, TB) qui relient les raccordements de travail (A, B) à un réservoir de fluide sous pression,
f. un poussoir (38) qui déplace axialement le piston creux (33) par l'intermédiaire d'un organe de réglage,
g. le piston creux (33) présentant à son extrémité tournée vers le raccordement (P) de fluide sous pression une première section (39) de piston présentant un premier diamètre extérieur (D1), petit,
h. à la suite et au voisinage de cette première section (39) de piston, une deuxième section (40) de piston qui présente un deuxième diamètre extérieur (D2), grand, et
i. une troisième section (41) de piston qui présente un troisième diamètre extérieur (D3) intermédiaire entre les deux précédents, les trois sections (39, 40, 41) de piston pouvant chacune coulisser à tolérance d'étanchéité dans une section (42, 43, 44) du boîtier de soupape (31),
j. le piston creux (33) présentant pour l'équilibrage de pression une surface de poussée (A1, A3) respectivement sur la première section (39) du piston et la troisième section (41) du piston, une force axiale (F1, F3) qui s'éloigne du raccordement (P) de fluide sous pression pouvant être appliquée sur la surface de poussée lorsqu'une pression est appliquée sur le piston creux (33), la force axiale agissant de manière additive comme force (F1,3) sur le piston creux (33), une autre surface de poussée (A2) prévue sur la deuxième section de piston (40) étant formée sur le piston creux (33) et une force axiale (F2) orientée vers le raccordement (P) de fluide sous pression pouvant être appliquée sur cette surface de poussée qui est l'unique surface de poussée du piston creux (33), les forces (F1,3, F2) agissant sur le piston creux (33) dans les deux directions axiales étant essentiellement identiques de telle sorte que la force (F1) appliquée sur la première section (39) du piston est essentiellement compensée par les forces (F2, F3) qui règnent entre les raccordements de travail (A, B).

2. Soupape hydraulique (30) selon la revendication 1, **caractérisée en ce que** la première section (42) du boîtier est formée par une douille (45) disposée dans l'alésage (32) du boîtier de soupape (31).

3. Soupape hydraulique (30) selon la revendication 1, **caractérisée en ce que** la troisième section (44) du boîtier est formée par une douille disposée dans l'alésage (32) du boîtier de soupape (31).

4. Soupape hydraulique (30) selon au moins l'une des revendications 1 à 3 qui précèdent, **caractérisée en ce qu'**un alésage transversal (27) qui part de l'alésage (32) suit le raccordement (P) de fluide sous pression dans la direction axiale et sert de premier raccordement (TA) au réservoir, est suivi par le premier raccordement de travail (A) et ensuite le deuxième raccordement de travail (B), un deuxième raccordement (TB) au réservoir suivant le deuxième raccordement de travail (B) dans la direction axiale et étant formé par une sortie axiale (48) du boîtier.

5. Soupape hydraulique (30) selon au moins l'une des revendications qui précèdent, **caractérisée en ce que** la surface de poussée (A1) formée sur la première section (39) du piston est formée par une surface circulaire projetée et les surfaces de poussée (A2, A3) par sur la deuxième et la troisième section (40, 41) du piston sont formées comme des surfaces annulaires (64, 65) orientées l'une vers l'autre.

6. Soupape hydraulique (30) selon au moins l'une des revendications 2 et 4 ou 2 et 5 qui précèdent, **caractérisée en ce qu'**un premier espace annulaire (46) qui relie le premier raccordement de travail (A) au premier raccordement au réservoir (TA) est prévu entre la douille (45) et un gradin (47) formé entre la première et la deuxième section (39, 40) du piston.

7. Soupape hydraulique (30) selon la revendication 6, **caractérisée en ce qu'**un ressort de rappel (49) du piston creux (33) est disposé dans le premier espace annulaire (46) situé entre le gradin (47) et la douille (45).

8. Soupape hydraulique (30) selon la revendication 7, **caractérisée en ce que** la force de précontrainte élastique du ressort de rappel (49) peut être ajustée au moyen de la douille (45).

9. Soupape hydraulique (30) selon au moins l'une des revendications 6 à 8 qui précèdent, **caractérisée en ce qu'**un deuxième espace annulaire (50) configuré pour relier selon la position du piston creux (33) les raccordements de travail (A, B) au raccordement (P) de fluide de pression par l'intermédiaire de la sortie (37) du piston est prévu entre la deuxième et la troisième section (40, 41) du piston.

10. Soupape hydraulique (30) selon la revendication 9, **caractérisée en ce qu'**un troisième espace annulaire (53) configuré pour relier le raccordement de travail (B) au deuxième raccordement au réservoir (TB) est prévu entre la troisième section (41) du piston et la sortie (48) du boîtier.

11. Soupape hydraulique (30) selon la revendication 10, **caractérisée en ce que** le troisième espace annulaire (53) est formé par un gradin (55) ménagé dans la troisième section (41) du piston.

12. Soupape hydraulique (30) selon au moins l'une des revendications qui précèdent, **caractérisée en ce que** l'entrée (36) du boîtier est disposée axialement dans le boîtier (31) de la soupape.

13. Soupape hydraulique (30) selon au moins l'une des revendications 1 à 11 qui précèdent, **caractérisée en ce que** l'entrée du boîtier est disposée radialement dans le boîtier (31) de la soupape.

14. Soupape hydraulique (30) selon au moins l'une des revendications qui précèdent, **caractérisée en ce qu'**une soupape anti-retour (54) est disposée dans l'entrée (36) du boîtier.

15. Soupape hydraulique (30) selon au moins l'une des revendications qui précèdent, **caractérisée en ce que** le poussoir (38) est accouplé au piston creux (33).

16. Dispositif (14) d'ajustement de moteur pivotant présentant un stator (1) et un rotor (8) apte à tourner par rapport au stator (1) entre une première position d'extrémité et une deuxième position d'extrémité, pour l'ajustement d'un arbre (18) à cames d'un moteur à combustion interne, **caractérisé en ce que** le dispositif (14) d'ajustement de moteur pivotant présente pour la commande de la rotation du rotor (8) une soupape hydraulique (30) selon au moins l'une des revendications précédentes.
